# EUROPEAN PATENT APPLICATION

(11) **EP 4 686 605 A1**
(43) Date of publication of application: **04.02.2026**
(21) Application number: 25193250.5
(22) Date of filing: 31.07.2025
(51) Int. Cl.: B60Q 1/00, B60Q 1/26, B60Q 1/50

(54) **WORK VEHICLE**

(30) Priority: 01.08.2024 JP 2024125574
(71) Applicant: Yanmar Holdings Co., Ltd., Osaka-shi, Osaka (JP)
(72) Inventor: YAMAGUCHI, Masafumi, Okayama (JP)
(74) Representative: Sekiguchi, Kazuya

(57) **Abstract**

[Problem] To provide a work vehicle in which a canopy member can be provided and visibility of a beacon lamp can be secured.

[Solution] A tractor 1, a work vehicle, includes a driver's seat 30 on which a driver is seated, a protection frame 4 having a vertical frame 40 that is erected on the rear side of the driver's seat 30, and a beacon lamp 5 attached to the vertical frame 40. For example, the beacon lamp 5 is placed outside the vertical frame 40 in the left-right direction and below the horizontal frame 41.

## Description

### TECHNICAL FIELD

The present invention relates to a work vehicle.

### BACKGROUND ART

Since a work vehicle such as a tractor travels on a road at a lower speed than an automobile or the like, the work vehicle includes a beacon lamp or a low-speed vehicle mark (so-called SMV mark) that notifies the surroundings of the presence of the vehicle. The beacon lamp and the low-speed vehicle mark are preferably placed at positions that are easily viewed from the surroundings, and are attached to, for example, a protection frame of a rollover protection structure (ROPS) of the tractor.

For example, in a work vehicle disclosed in Patent Document 1, a protection frame that protects a driver sitting on a driver's seat at the time of rollover of a machine body is erected, the protection frame has a lower protection frame fixed to a base frame and an upper protection frame connected, to be foldable, to the lower protection frame, and a beacon lamp (low-speed vehicle indicator lamp) is attached to a horizontal frame portion constituting the upper protection frame.

### PRIOR ART DOCUMENT

### PATENT DOCUMENT

Patent Document 1: Japanese Unexamined Patent Publication No. 2019-163025

### SUMMARY OF INVENTION

### TECHNICAL PROBLEM

In the conventional work vehicle as in Patent Document 1, since the beacon lamp is attached to the upper side of the protection frame, a canopy member such as a canopy cannot be provided on the protection frame. Also, the protection frame is not provided with a place where the low-speed vehicle mark is placed. Additionally, although there is a work vehicle in which a rotation shaft extending in the left-right direction is provided in a protection frame and the protection frame is configured to be tiltable, when a beacon lamp is attached to the upper side of the protection frame, the beacon lamp may interfere with a peripheral component when the protection frame is rotated.

An object of the present invention is to provide a work vehicle in which a canopy member can be provided, while in which the visibility of a beacon lamp can be ensured.

### SOLUTION TO PROBLEM

In order to solve the above-described problem, a work vehicle of the present invention includes a driver's seat, a protection frame having a vertical frame erected on a rear side of the driver's seat, and a beacon lamp attached to the vertical frame.

### ADVANTAGEOUS EFFECTS OF INVENTION

According to the present invention, a work vehicle in which a canopy member can be provided, while in which the visibility of a beacon lamp can be ensured, is provided.

### BRIEF DESCRIPTION OF DRAWINGS

FIG. 1 is a side view schematically illustrating a tractor according to an embodiment of the present invention.
FIG. 2 is a rear view schematically illustrating the tractor according to the embodiment of the present invention.
FIG. 3 is a side view illustrating a state where a canopy member of the tractor according to the embodiment of the present invention is attached.
FIG. 4 is a rear perspective view illustrating a state where a protection frame of the tractor according to the embodiment of the present invention is tilted.
FIG. 5 is a rear side view illustrating a state where the protection frame of the tractor according to the embodiment of the present invention is tilted.

### DESCRIPTION OF EMBODIMENTS

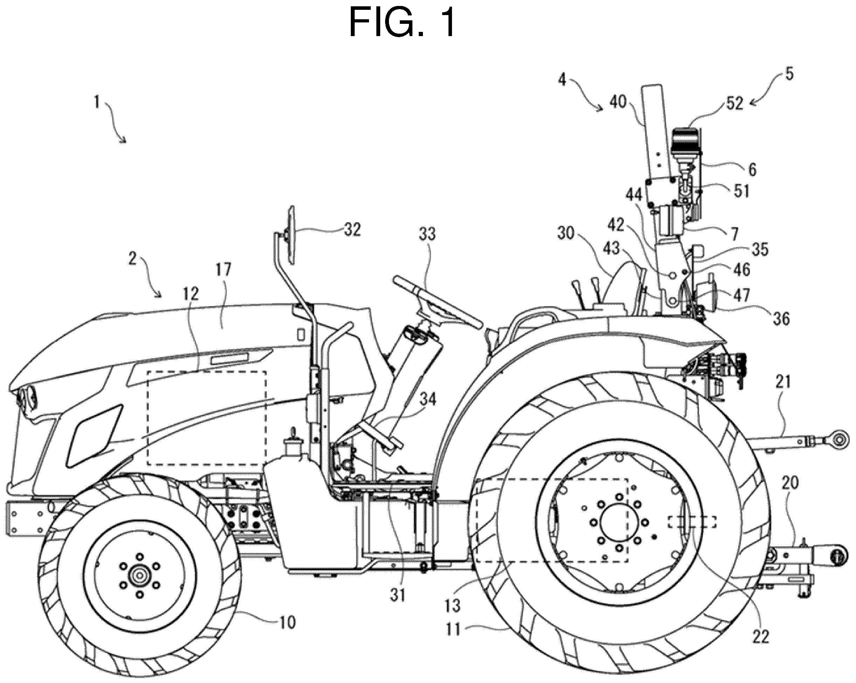

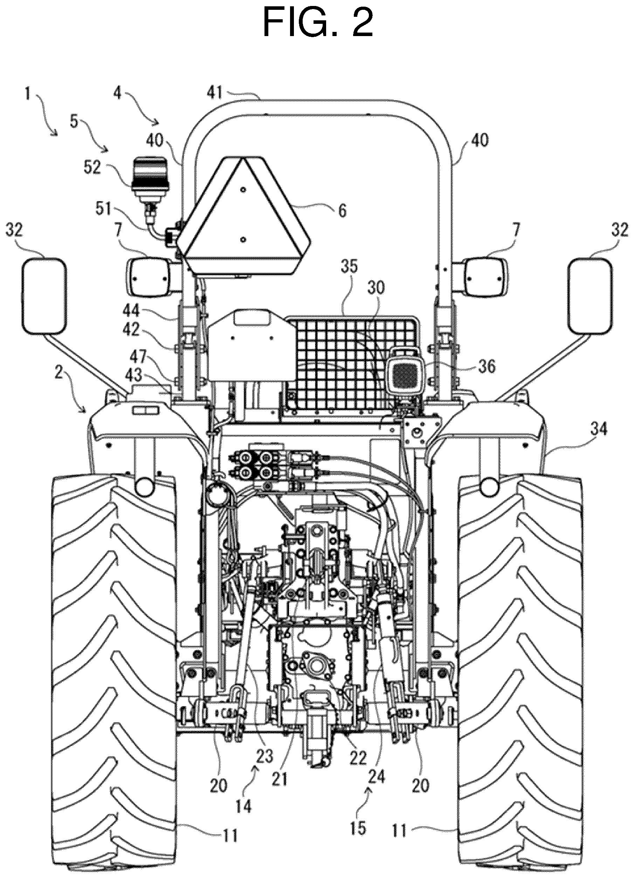

A work vehicle of the present invention performs work travel in which work is performed by a work machine while traveling in a farm. Tractor 1, which is an embodiment of a work vehicle of the present invention, will be described with reference to the drawings. FIG. 1 is a side view of the tractor 1, and FIG. 2 is a rear view of the tractor 1.

As illustrated in FIGS. 1 and 2, the tractor 1 includes a vehicle body 2 and a work machine (not illustrated), and is configured to perform work such as tilling with the work machine while traveling with the vehicle body 2. In the tractor 1, work machine such as a rotary, a halo, a loader, or a box scraper that performs various types of work is attached to the vehicle body 2 as necessary. In the present embodiment, in particular, the tractor 1 includes a protection frame 4 having a rollover protection structure (ROPS), and a beacon lamp 5 and a low-speed vehicle mark 6 (so-called SMV mark) that notify the surroundings of the presence of the vehicle.

A pair of left and right front wheels 10 is provided on the lower front portion of the vehicle body 2, and a pair of left and right rear wheels 11 is provided on the lower rear portion of the vehicle body 2. In the present embodiment, as illustrated in FIG. 1, an example in which the front wheels 10 are composed of tire and the rear wheels 11 are composed of a tire will be described, while in another example, the rear wheels 11 may be composed of half crawler, or full crawler may be included instead of the front wheels 10 and the rear wheels 11.

An engine 12 is incorporated in front portion of the vehicle body 2, and the engine 12 is covered with a hood 17. A speed change device 13 is provided behind the engine 12 and between the pair of left and right rear wheels 11. Power of the engine 12 is transmitted to the speed change device 13, is changed in speed by the speed change device 13, and is transmitted to each of the front wheels 10 and each of the rear wheels 11. Rear portion of the vehicle body 2 is provided with a work machine lifting and lowering mechanism 14 and a work machine angle change mechanism 15 as a drive unit that drives the work machine by hydraulic pressure of hydraulic oil.

A pair of left and right lower links 20, a top link 21, and a PTO shaft 22 are connected to rear portion of the speed change device 13, and each of the lower links 20, the top link 21, and the PTO shaft 22 are placed so as to extend backward. The work machine is connected to each of the rear ends of the lower links 20, the top link 21, and the PTO shaft 22, and is driven by the PTO shaft 22.

The work machine lifting and lowering mechanism 14 includes a pair of left and right lift arms (not illustrated) and a lift cylinder (not illustrated) composed of a hydraulic cylinder. Distal end portion of one (left) lift arm is connected to one (left) lower link 20 via link member 23, and distal end portion of the other (right) lift arm is connected to the other (right) lower link 20 via rolling cylinder 24. The work machine lifting and lowering mechanism 14 can change height of the work machine supported by the vehicle body 2 by driving a lift cylinder with hydraulic pressure of hydraulic oil supplied from a hydraulic pump (not illustrated) of the speed change device 13.

A work machine angle change mechanism 15 includes a rolling cylinder 24 composed of the hydraulic cylinder. As described above, the rolling cylinder 24 is configured to connect the other lift arm and the other lower link 20. The work machine angle change mechanism 15 can change the inclined posture in the left-right direction of the work machine supported on the vehicle body 2 by driving the rolling cylinder 24 by the oil pressure of the hydraulic oil supplied from the hydraulic pumps of the speed change device 13.

A driver's seat 30 on which the driver is seated is provided on upper portion of the vehicle body 2, and various operation tools are provided around the driver's seat 30. A step 31 that serves as a step base when the driver gets on or off the driver's seat 30 is provided below the driver's seat 30. A side mirror 32 for allowing the driver seated in the driver's seat 30 to check behind is provided in front of the driver's seat 30.

For example, as the operation tool, a steering wheel 33 for operating the steering of the front wheels 10 is provided in front of the driver's seat 30. A lifting and lowering lever (not illustrated) for forcibly moving the work machine to the highest position or the lowest position, and a forward and backward switching lever (not illustrated) for switching the traveling direction of the vehicle body 2 between forward and backward, etc., are provided around the steering wheel 33. Various pedals 34 that are operated by the driver are provided on a floor surface below the steering wheel 33. The various pedals 34 include a brake pedal for performing a braking operation of the vehicle body 2, a clutch pedal for operating a clutch (not illustrated) that switches between transmission and cutoff of power, and an accelerator pedal for performing an acceleration or deceleration operation of the rotation number of the engine 12 (the vehicle speed of the vehicle body 2), etc.

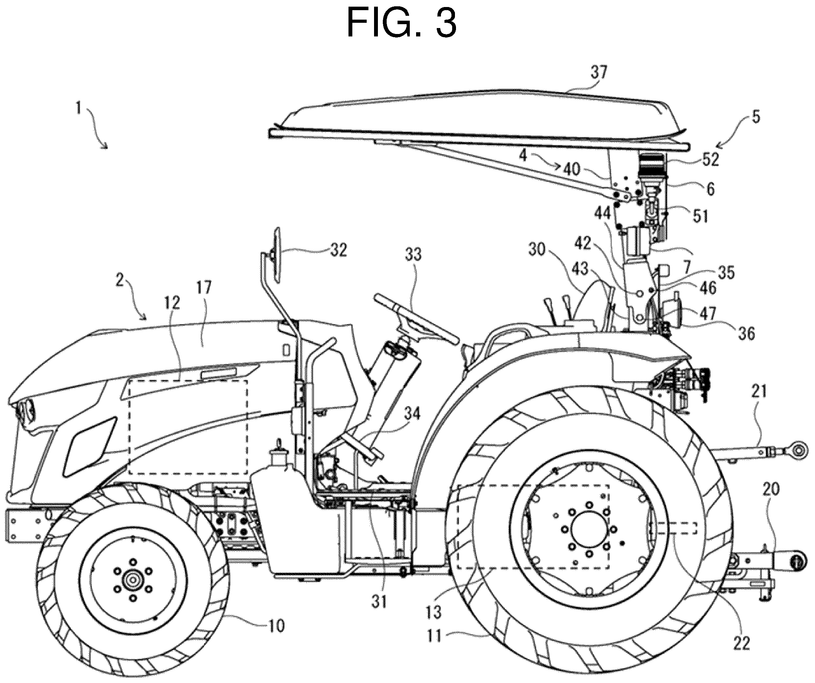

A protection frame 4 of a rollover protection structure (ROPS) for protecting the driver sitting on the driver's seat 30 is erected on the vehicle body 2 on the rear side of the driver's seat 30. The protection frame 4 is attached with a safety guard 35 that shields an operation tool etc. around the driver's seat 30 from the rear of the vehicle body 2 so that the operation tool etc. cannot be touched, and a work lamp 36 that irradiates rear work with the work machine. As illustrated in FIG. 3, the protection frame 4 is configured such that the canopy member 37 such as a canopy can be attached to the protection frame 4.

The protection frame 4 has a pair of vertical frames 40 and a horizontal frames 41. The pair of vertical frames 40 is provided to stand on both end sides in the left-right direction on the rear side of the driver's seat 30, and are placed to extend in the up-down direction, for example. The horizontal frame 41 is placed to extend in the horizontal direction so as to be bridged between the pair of vertical frames 40, and is provided, for example, on the upper end side of the pair of vertical frames 40. The canopy member 37 is attachable to the upper surface side of the horizontal frame 41, and the pair of vertical frames 40 may be configured to be able to support the canopy member 37.

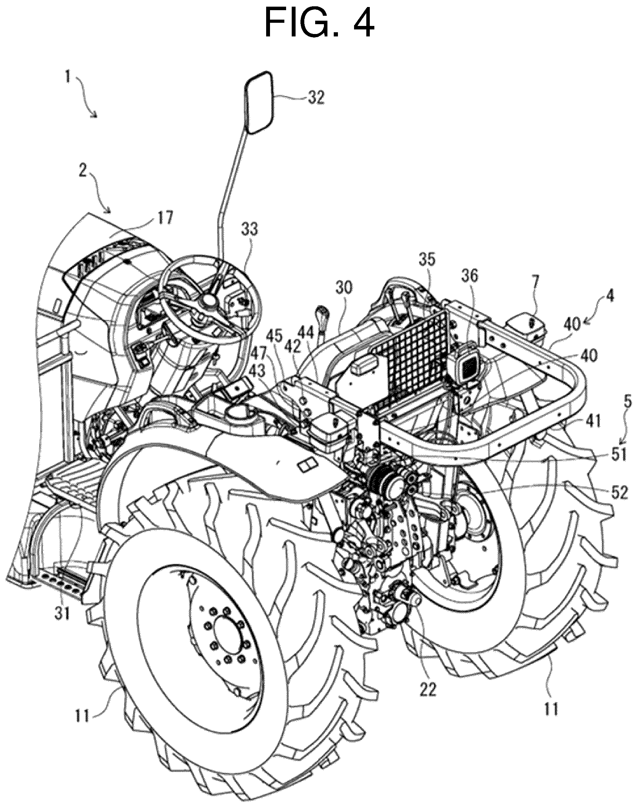

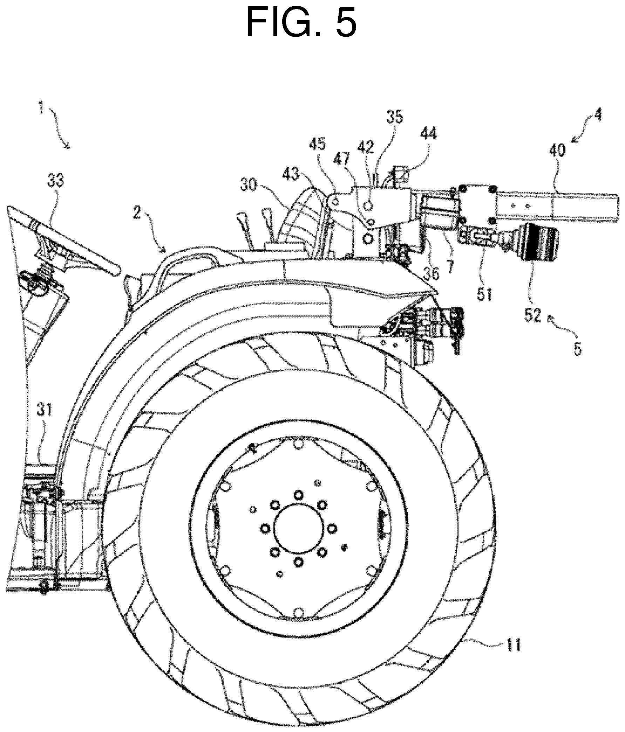

As illustrated in FIGS. 4 and 5, the protection frame 4 is configured to be retractable so as to be housed when the tractor 1 is not being driven. For example, the protection frame 4 has a rotation shaft 42 extending in the left-right direction at an end portion of the pair of vertical frames 40, and is provided to be rotatable about the rotation shaft 42 between a raised state (see FIGS. 1, 2, and 3) and a tilted state (see FIGS. 4 and 5).

Specifically, the vehicle body 2 is provided with a support frame 43 for rotatably supporting the protection frame 4, and the protection frame 4 is provided such that a rotation frame 44 having a rotation shaft 42 is provided at an end portion of a vertical frame 40. The rotation shaft 42 of the rotation frame 44 is pivotally supported by the support frame 43, and thus the protection frame 4 is rotatable. The rotation frame 44 has a fixing hole 45 for the raised state and a fixing hole 46 for the tilted state, by which the protection frame 4 is maintained in the raised state or the tilted state by fixing the fixing shaft 47 to the support frame 43 via any one of the fixing holes 45 and 46. FIGS. 1, 2, and 3 illustrate a state where the fixing shaft 47 is inserted into the fixing hole 45 for the raised state, and FIGS. 4 and 5 illustrate a state where the fixing shaft 47 is inserted into the fixing hole 46 for the tilted state.

In the present embodiment, since the tractor 1 travels on a road at a lower speed than an automobile or the like, it includes a beacon lamp 5 and a low-speed vehicle mark 6 (so-called SMV mark) that notify the surroundings of the presence of the vehicle.

The beacon lamp 5 notifies the surroundings of the presence of the vehicle by lighting, and is attached to one vertical frame 40 of the protection frame 4, for example, the vertical frame 40 on the traffic side (left side) of the vehicle. The beacon lamp 5 is placed below the horizontal frame 41 of the protection frame 4, above the rotation shaft 42, and outside the vertical frame 40 in the left-right direction.

The beacon lamp 5 has an attachment portion 51 and a lighting portion 52 connected to the attachment portion 51, and is attached to the vertical frame 40 by the attachment portion 51, while the lighting portion 52 is provided on the outer side of the vertical frame 40 in the left-right direction. The beacon lamp 5 is placed at a position where the lighting portion 52 does not overlap with the side mirror 32 and does not interfere with the direction indicator 7. Although not illustrated, the harness of the beacon lamp 5 is fixed to the attachment portion 51, an attachment member of the low-speed vehicle mark 6, another member etc., and is placed in a state where it does not interfere with another component when the protection frame 4 is rotated.

The low-speed vehicle mark 6 notifies the existence of low-speed vehicle to the rear by its shape, its fluorescent material, or its reflective material, and is placed on the same side as the beacon lamp 5, and is attached to, for example, the vertical frame 40 on the same side as the beacon lamp 5. The low-speed vehicle mark 6 is placed below the horizontal frame 41 of the protection frame 4, above the rotation shaft 42, and inside the vertical frame 40 in the left-right direction.

Also, the beacon lamp 5 and the low-speed vehicle mark 6 are placed at positions where they do not interfere with peripheral components when the protection frame 4 is in the raised state and also do not interfere with the safety guard 35, the work lamp 36, the work machine, the license plate, and other peripheral components when the protection frame 4 is rotated to the tilted state as illustrated in FIGS. 4 and 5.

As described above, according to the present embodiment, the tractor 1, a work vehicle, includes the driver's seat 30 on which the driver is seated, the protection frame 4 having the vertical frame 40 that is erected on the rear side of the driver's seat 30, and the beacon lamp 5 attached to the vertical frame 40.

Accordingly, in the tractor 1, the canopy member 37 can be attached to the protection frame 4 regardless of the placement of the beacon lamp 5, and the visibility of the beacon lamp 5 can be ensured regardless of the installation of the protection frame 4 and the canopy member 37.

According to the present embodiment, the beacon lamp 5 is placed on the outer side of the vertical frame 40 in the left-right direction.

Accordingly, since the beacon lamp 5 is placed at a position that is easily viewed from the surroundings in the tractor 1, the visibility of the beacon lamp 5 can be improved.

According to the present embodiment, the protection frame 4 has the horizontal frame 41 placed to extend in the horizontal direction, and the beacon lamp 5 is placed below the horizontal frame 41.

Accordingly, in the tractor 1, the canopy member 37 can be attached to the horizontal frame 41 of the protection frame 4 regardless of the installation of the beacon lamp 5, and the visibility of the beacon lamp 5 can be ensured regardless of the placement of the horizontal frame 41 and the canopy member 37.

According to the present embodiment, the beacon lamp 5 is attached to the vertical frame 40 placed on one side in the left-right direction, and the low-speed vehicle mark 6 is placed on the same side as the beacon lamp 5 in the left-right direction.

Accordingly, in the tractor 1, the canopy member 37 can be attached to the protection frame 4 regardless of the installation of the beacon lamp 5 and the low-speed vehicle mark 6, and the visibility of the beacon lamp 5 and the low-speed vehicle mark 6 can be ensured regardless of the placement of the protection frame 4 and the canopy member 37.

According to the present embodiment, the low-speed vehicle mark 6 is placed on the vertical frame 40 to which the beacon lamp 5 is attached.

Accordingly, by placing the beacon lamp 5 and the low-speed vehicle mark 6 close to each other in the tractor 1, the simultaneous visibility of the beacon lamp 5 and the low-speed vehicle mark 6 can be ensured.

According to the present embodiment, the low-speed vehicle mark 6 is placed inside the vertical frame 40 in the left-right direction.

Accordingly, in the tractor 1, by providing the beacon lamp 5 and the low-speed vehicle mark 6 on both sides of the vertical frame 40, the beacon lamp 5 and the low-speed vehicle mark 6 can be placed close to each other at the same height, and the simultaneous visibility of the beacon lamp 5 and the low-speed vehicle mark 6 can be ensured.

According to the present embodiment, the protection frame 4 is provided to be rotatable about the rotation shaft 42 extending in the left-right direction, and the beacon lamp 5 and the low-speed vehicle mark 6 are placed above the rotation shaft 42.

Accordingly, in the tractor 1, the protection frame 4 can be rotated to the tilted state and housed regardless of the installation of the beacon lamp 5 and the low-speed vehicle mark 6, and interference of the beacon lamp 5 and the low-speed vehicle mark 6 with a peripheral member can be prevented when the protection frame 4 is rotated.

Although an example in which the work vehicle of the present invention is configured by the tractor 1 has been described in the above-described embodiment, the present invention is not limited to this example, and the work vehicle of the present invention may be configured by a work vehicle such as another agricultural work machine.

Also, the present invention can be appropriately modified within a range that does not contradict the gist or concept of the invention that can be read throughout the claims and the specification, and work vehicles with such modifications are also included in the technical concept of the present invention.

### [Supplementary Note of Invention]

Hereinafter, outlines of the invention extracted from the above-described embodiment will be described in Supplementary Notes. Also, components and processing functions described in the following supplementary notes can be arbitrary selected and combined.

### <Supplementary Note 1>

A work vehicle comprising a driver's seat;
a protection frame having a vertical frame that is erected on a rear side of the driver's seat; and
a beacon lamp attached to the vertical frame.

### <Supplementary Note 2>

The work vehicle according to supplementary note 1, wherein the beacon lamp is placed on an outer side of the vertical frame in a left-right direction.

### <Supplementary Note 3>

The work vehicle according to any one of Supplementary Notes 1 to 2, wherein the protection frame has a horizontal frame placed to extend horizontally, and
wherein the beacon lamp is placed below the horizontal frame.

### <Supplementary Note 4>

The work vehicle according to any one of Supplementary Notes 1 to 3, wherein the beacon lamp is attached to the vertical frame placed on one side in a left-right direction, and
wherein a low-speed vehicle mark is placed on the same side as the beacon lamp in the left-right direction.

### <Supplementary Note 5>

The work vehicle according to Supplementary Note 4, wherein the low-speed vehicle mark is placed on the vertical frame to which the beacon lamp is attached.

### <Supplementary Note 6>

The work vehicle according to any one of Supplementary Notes 4 to 5, wherein the low-speed vehicle mark is placed on an inner side of the vertical frame in a left-right direction.

### <Supplementary Note 7>

The work vehicle according to any one of Supplementary Notes 4 to 6, wherein the protection frame is provided to be rotatable about a rotation shaft extending in a left-right direction, and
wherein the beacon lamp and the low-speed vehicle mark are placed above the rotation shaft.

### <Supplementary Note 8>

The work vehicle according to Supplementary Note 7, wherein the protection frame is provided to be rotatable between a raised state and a tilted state, and
wherein, in the tilted state, the beacon lamp and the low-speed vehicle mark are placed in a state that does not interfere with a peripheral component.

### REFERENCE SIGNS LIST

1 Tractor (Work vehicle)
2 Vehicle body
4 Protection frame
5 Beacon lamp
6 Low-speed vehicle mark
7 Direction indicator
30 Driver's seat
31 Step
32 Side mirror
33 Steering wheel
34 Pedal
35 Safety guard
36 Work lamp
37 Canopy member
40 Vertical frame
41 Horizontal frame
42 Rotation shaft
43 Support frame
44 Rotation frame
45 Fixing hole
46 Fixing hole
47 Fixing shaft
51 Attachment portion
52 Lighting portion

## Claims

1. A work vehicle comprising a driver's seat;
a protection frame having a vertical frame that is erected on a rear side of the driver's seat; and
a beacon lamp attached to the vertical frame.

2. The work vehicle according to claim 1, wherein the beacon lamp is placed on an outer side of the vertical frame in a left-right direction.

3. The work vehicle according to claim 1, wherein the protection frame has a horizontal frame that extends horizontally, and
the beacon lamp is placed below the horizontal frame.

4. The work vehicle according to claim 1, wherein the beacon lamp is attached to the vertical frame placed on one side in a left-right direction of the work vehicle, and
a low-speed vehicle mark is placed on the same side as the beacon lamp in the left-right direction.

5. The work vehicle according to claim 4, wherein the low-speed vehicle mark is placed on the vertical frame to which the beacon lamp is attached.

6. The work vehicle according to claim 4, wherein the low-speed vehicle mark is placed on an inner side of the vertical frame in a left-right direction.

7. The work vehicle according to claim 4, wherein the protection frame is provided to be rotatable about a rotation shaft extending in a left-right direction, and
the beacon lamp and the low-speed vehicle mark are placed above the rotation shaft.

8. The work vehicle according to claim 7, wherein the protection frame is provided to be rotatable between a raised state and a tilted state, and
in the tilted state, the beacon lamp and the low-speed vehicle mark are placed in a state that does not interfere with a peripheral component.
